# EUROPÄISCHE PATENTSCHRIFT

(11) **EP 1 099 596 B1**
(45) Veröffentlichungstag und Bekanntmachung des Hinweises auf die Patenterteilung: **07.06.2006**
(21) Anmeldenummer: 00119965.2
(22) Anmeldetag: 14.09.2000
(51) Int. Cl.: B60N 3/10

(54) **Haltevorrichtung für einen Getränkebehälter**
Holder for beverage receptacle
Dispositif de support d'un réceptacle de boissons

(30) Priorität: 13.11.1999 DE 19954670
(43) Veröffentlichungstag der Anmeldung: 16.05.2001
(73) Patentinhaber: fischerwerke Artur Fischer GmbH & Co. KG, 72178 Waldachtal (DE)
(72) Erfinder: Bieck, Torsten, 72178 Waldachtal (DE); Breyer, Gunter, 85055 Etting (DE); Stoll, Hans-Peter, 72280 Dornstetten (DE); Bolländer, Jochen, 85049 Ingolstadt (DE)

(56) Entgegenhaltungen:
- EP-A- 0 730 995
- US-A- 5 845 888
- PATENT ABSTRACTS OF JAPAN vol. 1997, no. 07, 31. Juli 1997 (1997-07-31) & JP 09 076811 A (NIFCO INC), 25. März 1997 (1997-03-25)

## Beschreibung

Die Erfindung betrifft eine Haltevorrichtung für einen Getränkebehälter wie beispielsweise eine Getränkedose, einen Becher oder eine Tasse, die zum geneigten Einbau beispielsweise in einem Armaturenbrett eines Kraftwagens vorgesehen ist. Mit geneigtem Einbau ist gemeint, dass die Haltevorrichtung auf einer gedachten, schiefen Ebene, also in einem Winkel zu einer horizontalen Fläche eingebaut wird.

Aus der EP 0 730 995 A ist eine derartige Haltevorrichtung bekannt. Die Haltevorrichtung weist einen Schlitten auf, der mit einer Schiebeführung schubladenartig aus einer eingeschobenen Stellung in eine ausgezogene Stellung verschiebbar geführt ist. In der ausgezogenen Stellung ist ein Getränkebehälter in die Haltevorrichtung einstellbar. Der Schlitten ist mit der Schiebeführung in der geneigten, schiefen Ebene verschiebbar geführt. Am Schlitten ist beispielsweise über ein Schwenkgelenk ein Halteelement mit einer Einstellöffnung zum Einstellen des Getränkebehälters angebracht. Das Halteelement ist vom Schlitten nach oben schwenkbar, beispielsweise in eine in etwa horizontale Lage. Des Weiteren ist eine Stütze nach unten schwenkbar am Schlitten angebracht, auf die ein in die Einstellöffnung des Halteelements eingestellter Getränkebehälter stellbar ist. Die Stütze hat die Form eines Bügels, sie schwenkt nach unten, wenn das Halteelement nach oben schwenkt. Die Stütze ist durch seitlich nach innen abstehende Zapfen des Halteelements, die gleitbar in Langlöcher in der Stütze eingreifen, mit dem Halteelement gekoppelt.

Die JP 09 076 811 A offenbart eine Haltevorrichtung für einen Getränkebehälter mit zwei Schlitten, deren einer in einem Gehäuse schubladenartig verschiebbar und deren anderer im einen Schlitten verschiebbar und nach oben schwenkbar geführt ist. An dem weiter ausfahrbaren anderen Schlitten ist ein nach oben schwenkbares Halteelement mit einer Einstellöffnung sowie ein plattenförmiges, in eine horizontale Ebene schwenkbares Abstellelement angebracht.

Die US 5,845,888 A offenbart eine Haltevorrichtung für einen Getränkebehälter mit einem nahezu vertikal nach oben und nur wenig geneigt ausfahrbaren Schlitten. Am Schlitten ist ein plattenförmiges Abstellelement in eine Horizontale schwenkbar angebracht. Am Abstellelement ist mit einer Parallelogrammführung ein eine Einstellöffnung aufweisendes Halteelement angebracht, das beim Schwenken des Abstellelements in die Horizontale angehoben wird, so dass es vertikalen Abstand vom Abstellelement aufweist.

Der Erfindung liegt die Aufgabe zugrunde, eine Haltevorrichtung der vorstehend erläuterten Art so auszubilden, dass sie flachbauend ausführbar ist, und dass sie bei geneigtem Einbau einen eingestellten Getränkebehälter zumindest in etwa senkrecht stehend hält.

Diese Aufgabe wird durch die Merkmale des Anspruchs 1 gelöst. Die erfindungsgemäße Haltevorrichtung weist ein Abstellelement auf, das vorzugsweise als flächiges Bauteil ausgebildet ist und das mit einer Führung nach unten bewegbar am Schlitten der Haltevorrichtung geführt ist. Als Führungen kommen beispielsweise Hebel- oder Schwenkführungen in Betracht. Mittels der Führung wird das Abstellelement beim Bewegen nach unten in eine in etwa horizontale Lage mit Abstand unterhalb des Halteelements verbracht. Ein in die Einstellöffnung des Halteelements eingestellter Getränkebehälter ist auf das Abstellelement stellbar. Der auf das Abstellelement gestellte Getränkebehälter wird trotz des geneigten Einbaus der Haltevorrichtung zumindest in etwa vertikal stehend gehalten. Durch den vertikalen Abstand zwischen dem nach oben geschwenkten Halteelement und dem nach unten bewegten Abstellelement wird der Getränkebehälter vom Halteelement in ausreichender Höhe seitlich abgestützt, um den Getränkebehälter sicher gegen Kippen während der Fahrt des Kraftwagens zu halten.

Des Weiteren weist die erfindungsgemäße Haltevorrichtung ein Hebelgetriebe auf, das das Abstellelement mit dem Halteelement verbindet und das das Abstellelement nach unten bewegt, wenn das Halteelement nach oben schwenkt. Das Getriebe wird also vom Halteelement angetrieben und treibt seinerseits das Abstellelement an, die Bewegung des Abstellelements wird vom Halteelement abgeleitet.

Die erfindungsgemäße Haltevorrichtung hat den Vorteil, dass sie flachbauend ausbildbar ist und deswegen wenig Bauraum beispielsweise in einem Armaturenbrett eines Kraftwagens benötigt. Weiterer Vorteil der Erfindung ist, dass sie einen geneigten, beispielsweise einer Schrägstellung eines Armaturenbretts angepassten Einbau ermöglicht und einen eingestellten Getränkebehälter trotzdem senkrecht stehend und sicher gegen Kippen hält.

Bei einer Weiterbildung der Erfindung weist die Haltevorrichtung ein Gesperre auf, das das Halteelement in dessen nach oben geschwenkter Stellung gegen ein (versehentliches) Niederdrücken sperrt. Es kann beispielsweise das Getriebe, das das Abstellelement mit dem Halteelement verbindet, als Gesperre ausgebildet sein, das das Halteelement in dessen nach oben geschwenkter Stellung gegen eine Bewegung durch Niederdrücken am Halteelement sperrt. Ein Entsperren kann beispielsweise durch Verschieben des Schlittens aus der ausgezogenen Stellung in Richtung der eingeschobenen Stellung erfolgen.

Bei einer Ausgestaltung der Erfindung weist das Abstellelement eine Tropfschale auf, die während der Fahrt des Kraftwagens evtl. aus dem in die Haltevorrichtung eingestellten Getränkebehälter überschwappende Flüssigkeit auffängt. Es kann das Abstellelement selbst als Tropfschale ausgebildet sein oder es kann beispielsweise eine Tropfschale herausnehmbar in das Abstellelement eingesetzt sein.

Bei einer Ausgestaltung der Erfindung weist die Haltevorrichtung einen Schwenkbeschlag für das Abstellelement auf, mit dem das Abstellelement nach unten bewegbar und schwenkbar am Schlitten angebracht ist. Die Bewegbarkeit nach unten und die Schwenkbarkeit kann beispielsweise mittels eines Schwenkhebelgetriebes erreicht werden. Auch kann die Schwenkbarkeit und Bewegbarkeit des Abstellelements nach unten dadurch erreicht werden, das der Schwenkbeschlag eine Schwenkachse in einem hinteren Bereich oder auch über eine mit dem Abstellelement starre Verbindung hinter dem Abstellelement aufweist.

In bevorzugter Ausgestaltung der Erfindung weist die Haltevorrichtung mindestens ein Federelement auf, das das Halteelement nach oben schwenkt und dadurch über das Getriebe das Abstellelement nach unten bewegt. Das Federelement bewegt beim Verschieben des Schlittens aus der eingeschobenen in die ausgezogene Stellung das Halteelement nach oben und das Abstellelement nach unten, d. h. die Haltevorrichtung gelangt durch das Verschieben ihres Schlittens in die ausgezogene Stellung selbsttätig in eine Gebrauchsstellung, in der ein Getränkebehälter in die Haltevorrichtung einstellbar ist. Weitere Handgriffe außer dem Verschieben des Schlittens in die ausgezogene Stellung sind nicht notwendig, wobei das Verschieben des Schlittens in die ausgezogene Stellung ebenfalls federbetätigt erfolgen kann, so dass sich das Verbringen der erfindungsgemäßen Haltevorrichtung in die Gebrauchsstellung, in der ein Getränkebehälter einstellbar ist, auf ein einfaches Entriegeln einer Verriegelungseinrichtung beschränkt. Das Federelement kann unmittelbar am Halteelement oder auch mittelbar beispielsweise über das Abstellelement oder das das Abstellelement mit dem Halteelement verbindende Getriebe am Halteelement angreifen. Es können auch mehrere Federelemente Verwendung finden, die an verschiedenen Teilen der Haltevorrichtung angreifen.

In bevorzugter Ausgestaltung der Erfindung weist die Haltevorrichtung eine Rückstelleinrichtung für das Halteelement auf, die das Halteelement beim Verschieben des Schlittens aus der ausgezogenen in die eingeschobene Stellung nach unten auf den Schlitten schwenkt. Über das Getriebe wird mit dem Schwenken des Halteelements nach unten das Abstellelement nach oben an den Schlitten bewegt, so dass der Schieber mit dem Halteelement und dem Abstellelement durch eine niedrige Öffnung beispielsweise eines Armaturenbretts einschiebbar ist. Mittels der Rückstelleinrichtung erfolgt das Schwenken des Halteelements nach unten und das Bewegen des Abstellelements nach oben selbsttätig durch das Verschieben des Schlittens, das Halteelement muss nicht vor dem Verschieben des Schlittens in die eingeschobene Stellung nach unten geschwenkt werden. Vorzugsweise entsperrt auch die Rückstelleinrichtung das Gesperre, das das Halteelement in der nach oben geschwenkten Stellung gegen Niederdrücken sperrt, sofern ein solches Gesperre vorhanden ist.

Die Erfindung wird nachfolgend anhand eines in der Zeichnung dargestellten Ausführungsbeispiels näher erläutert. Es zeigen:

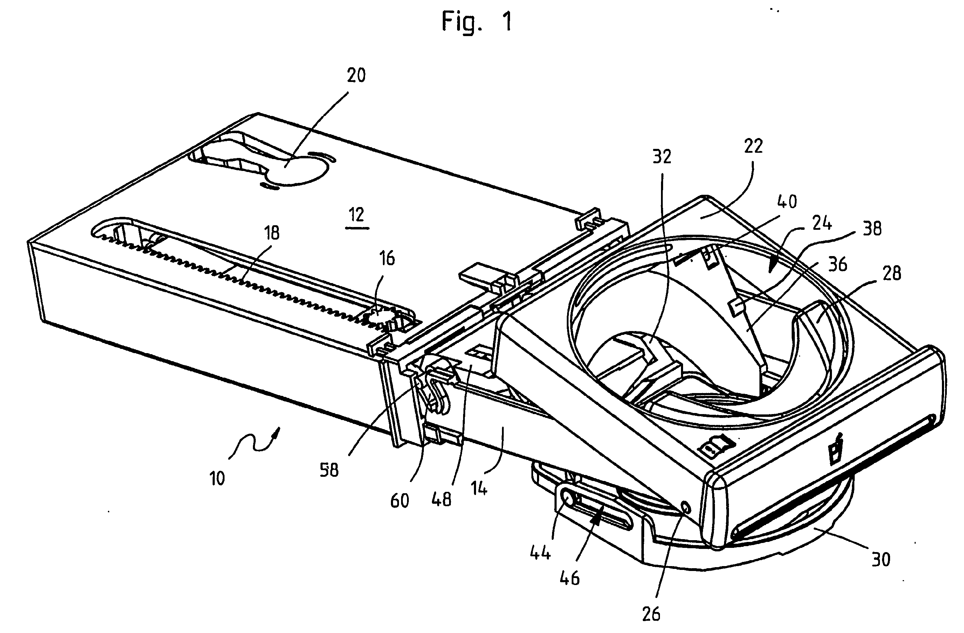

- Figur 1: eine erfindungsgemäße Haltevorrichtung in einer Gebrauchsstellung in perspektivischer Darstellung;
- Figur 2: die Haltevorrichtung aus Figur 1 in Seitenansicht;
- Figur 3: die Haltevorrichtung aus Figur 1 in Draufsicht; und
- Figur 4: die Haltevorrichtung gemäß Figur 2, wobei an sich verdeckte Teile der Haltevorrichtung mit Strichlinien dargestellt sind.

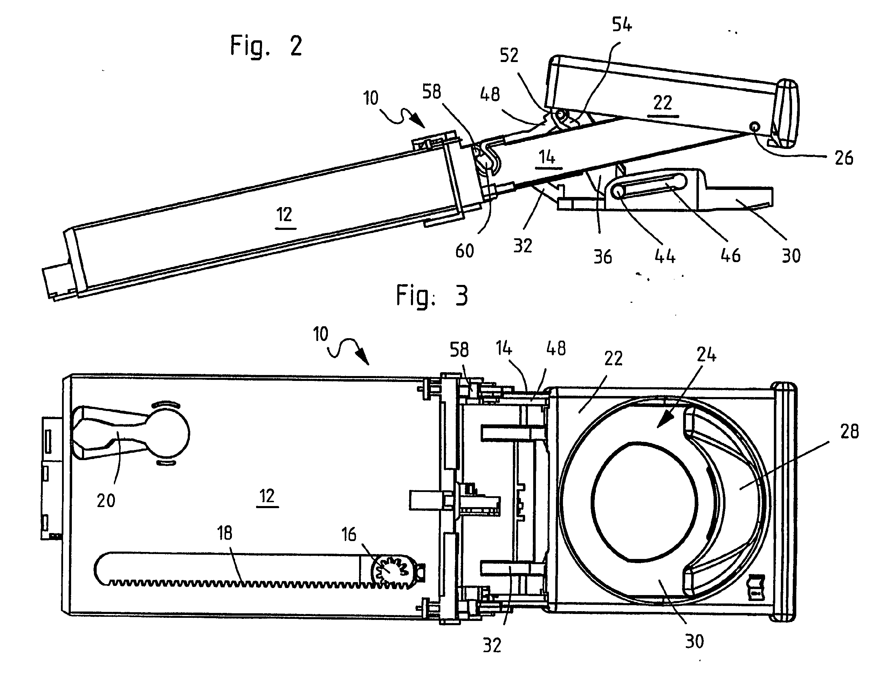

Die in der Zeichnung dargestellte, erfindungsgemäße Haltevorrichtung 10 ist zu einem geneigten Einbau beispielsweise in ein nicht dargestelltes Armaturenbrett eines Kraftwagens vorgesehen. In der Zeichnung ist eine Gebrauchsstellung der Haltevorrichtung 10 dargestellt, in der ein nicht dargestellter Getränkebehälter, beispielsweise eine Getränkedose, ein Becher oder eine Tasse in die Haltevorrichtung 10 einstellbar ist und von der Haltevorrichtung 10 sicher gegen Kippen gehalten wird. Die Haltevorrichtung 10 ist zu einem geneigten Einbau, d. h. zu einem Einbau in einer gedachten, schiefen Ebene unter einem Winkel zu einer gedachten, horizontalen Ebene vorgesehen. Die geneigte Einbaulage der Haltevorrichtung 10 ist in Figur 2 erkennbar.

Die Haltevorrichtung 10 weist ein flaches, an einer Vorderseite offenes Gehäuse 12 auf, in dem ein Schlitten 14 nach Art einer Schublade verschiebbar geführt ist. Das Gehäuse 12 bildet eine Schiebeführung für den Schlitten 14. Der Schlitten 14 ist aus einer nicht dargestellten, in das Gehäuse 12 eingeschobenen Stellung in die dargestellte, aus dem Gehäuse 12 ausgezogenen Stellung linear verschiebbar im Gehäuse 12 geführt. Eine in der Zeichnung nicht sichtbare, an einer Rückseite des Schlittens 14 angeordnete Rollfeder (Zugfeder), deren freies, abrollbares Ende nahe der Vorderseite am Boden des Gehäuses 12 angebracht ist, verschiebt den Schlitten 14 in die dargestellte, ausgezogene Stellung. Die Verschiebebewegung wird von einem Rotationsdämpfungselement 16 gedämpft, das in eine Oberseite des Schlittens 14 eingesetzt ist und dessen Zahnrad mit einer Zahnstange 18 des Gehäuses 12 kämmt. In der in das Gehäuse 12 eingeschobenen Stellung wird der Schlitten 14 mit einer an sich bekannten Push-Push- oder Herzkurvenverriegelungseinrichtung 20 gehalten, die durch Hineindrücken des in das Gehäuse eingeschobenen Schlittens 14 um einen kurzen Weg in das Gehäuse 12 hinein entriegelt wird. Nach der Entriegelung der Verriegelungseinrichtung 20 verschiebt die bereits genannte Rollfeder den Schlitten 14 in die dargestellte, aus dem Gehäuse 12 ausgezogene Stellung.

Am Schlitten 14 ist ein in Draufsicht näherungsweise quadratisches Halteelement 22 mit einer kreisförmigen Einstellöffnung 24 zum Einstellen des nicht dargestellten Getränkebehälters angeordnet. Das Halteelement 22 ist mit einem Schwenkgelenk 26 nach oben schwenkbar am Schlitten 14 angebracht. Das Schwenkgelenk 26 ist als Schwenkzapfenverbindung ausgebildet und nahe an einem vorderen Ende des Schlittens 14 bzw. des Halteelements 22 angeordnet. Um das Schwenkgelenk 26 ist das Halteelement 22 aus einer nicht dargestellten, flach auf dem Schlitten 14 aufliegenden Stellung in die in der Zeichnung dargestellte, nach oben geschwenkte Stellung schwenkbar. In der nicht dargestellten, auf dem Schlitten 14 aufliegenden Stellung ist der Schlitten 14 zusammen mit dem Halteelement 22 in das Gehäuse 12 einschiebbar. In der nach oben geschwenkten Stellung nimmt das Halteelement 22 näherungsweise eine horizontale Lage ein.

In der Einstellöffnung 24 ist in an sich bekannter Weise eine federbeaufschlagte Ausgleichsklappe 28 angeordnet, die beim Einstellen des nicht dargestellten Getränkebehälters in die Einstellöffnung 24 des Halteelements 22 nach unten und zur Seite gedrückt wird und die den eingestellten Getränkebehälter gegen die gegenüberliegende Seite der Einstellöffnung 24 drückt. Durch die Ausgleichsklappe 28 passt sich die erfindungsgemäße Haltevorrichtung 10 selbsttätig an Getränkebehälter unterschiedlichen Durchmessers an.

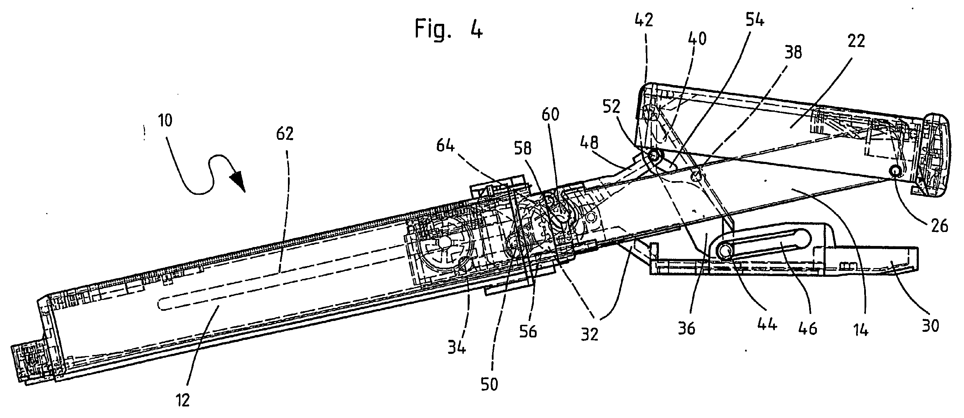

Im Schieber 14 ist ein plattenförmiges Abstellelement 30 mit nach oben stehendem, umlaufendem Rand angeordnet. Durch seinen nach oben stehenden, umlaufenden Rand ist das Abstellelement 30 als Tropfschale für aus dem eingestellten Getränkebehälter überschwappende Flüssigkeit ausgebildet. An seiner Rückseite weist das Abstellelement 30 einen mit ihm einstückigen, starren Fortsatz 32 (Figur 2) auf, der schräg nach hinten und oben vom Abstellelement 30 absteht. Über eine Schwenkzapfenverbindung 34 am hinteren Ende des Fortsatzes 32 ist das Abstellelement 30 mit dem Schlitten 14 der erfindungsgemäßen Haltevorrichtung 10 verbunden. Der Verlauf des Fortsatzes 32 und dessen Schwenkzapfenverbindung 34 mit dem Schlitten 14 ist in Figur 4 mit Strichlinien dargestellt. Der Fortsatz 32 mit dem Schwenkzapfen 34 bildet einen Schwenkbeschlag für das Abstellelement 30, mit dem das Abstellelement 30 aus einer nicht dargestellten, im Schieber 14 einliegenden Stellung in die in der Zeichnung dargestellte Stellung nach unten schwenkbar und bewegbar ist. Eine durch die Schwenkzapfenverbindung 34 definierte Schwenkachse befindet sich hinter dem eigentlichen Abstellelement 30. Durch das Schwenken um die Schwenkzapfenverbindung 34 beim Bewegen des Abstellelements 30 nach unten gelangt das Abstellelement 30 in eine in etwa horizontale Lage in einem Winkel zu dem in einer schiefen Ebene angeordneten und verschiebbaren Schlitten 14.

Über ein als Hebelgetriebe ausgebildetes Getriebe sind das Halteelement 22 und das Abstellelement 30 miteinander verbunden. Das Hebelgetriebe weist einen Hebel 36 auf, der über eine Schwenkzapfenverbindung 38 (Figur 4) ungefähr in seiner Mitte schwenkbar mit dem Schlitten 14 verbunden ist. An einem Ende weist der Hebel 36 auf beiden Seiten ein Langloch 40 auf, in das ein Schwenkzapfen 42 des Halteelements 22 eingreift. Dadurch ist der Hebel 36 schwenkbar und verschieblich mit dem Halteelement 22 verbunden. An seinem anderen Ende weist der Hebel 36 auf jeder Seite einen seitlich abstehenden Zapfen 44 auf, der in ein Langloch 46 in dem nach oben stehenden, umlaufenden Rand des Abstellelements 30 eingreift. Über den Zapfen 44 und das Langloch 46 ist der Hebel 36 schwenkbar und verschieblich mit dem Abstellelement 30 verbunden. Der Hebel 36 verbindet das Abstellelement 30 beweglich mit dem Halteelement 22. Schwenkt das Halteelement 22 in die dargestellte Stellung nach oben, bewegt und schwenkt der Hebel 36 das Abstellelement 30 aus der im Schlitten 14 einliegenden Stellung in die dargestellte, in etwa horizontale Stellung nach unten. In der nach unten geschwenkten Stellung ist ein in die Einstellöffnung 24 des Halteelements 22 eingestellter Getränkebehälter auf dem Abstellelement 30 abstellbar.

Die erfindungsgemäße Haltevorrichtung 10 weist eine Rückstelleinrichtung auf, die beim Einschieben des Schlittens 14 in das Gehäuse 12 das Halteelement 22 in die auf dem Schlitten 14 aufliegende Stellung nach unten schwenkt. Die Rückstelleinrichtung weist einen Hebel 48 auf, der über eine Schwenkzapfenverbindung 50 an seinem hinteren Ende schwenkbar im Bereich eines hinteren Endes des Schlittens 14 gelagert ist. An seinem vorderen Ende weist der Rückstellhebel 48 seitlich abstehende Zapfen 52 auf, die in ein abgeknickt verlaufendes Langloch 54 im Hebel 36 eingreifen, der das Abstellelement 30 mit dem Halteelement 22 verbindet. Die erfindungsgemäße Haltevorrichtung 10 weist ein Federelement 56 auf, welches mittelbar über den Rückstellhebel 48 das Halteelement 22 in die dargestellte Stellung nach oben drückt. Das Federelement 56 ist im dargestellten Ausführungsbeispiel als Torsionsschraubenfeder 56 ausgebildet, die auf den Zapfen 50, der den Rückstellhebel 48 mit dem Schlitten 14 verbindet, aufgesetzt ist und deren einer Schenkel sich an einem Boden des Schlittens 14 abstützt und deren anderer Schenkel am Rückstellhebel 48 angreift und diesen nach oben drückt. Beim Verschieben des Schlittens 14 aus dem Gehäuse 12 heraus schwenkt das Federelement 56 den Rückstellhebel 48 nach oben. Dabei schwenkt der Rückstellhebel 48 über den Hebel 36, der das Abstellelement 30 beweglich mit dem Halteelement 22 verbindet, das Halteelement 22 nach oben und bewegt und schwenkt zugleich das Abstellelement 30 in die dargestellte Stellung nach unten.

Zum Rückstellen weist der Rückstellhebel 48 auf beiden Seiten einen seitlich abstehenden Rückstellzapfen 58 auf, der einen Schlitz 60 des Schlittens 14 seitlich durchgreift. Die Rückstellzapfen 58 sind in einer Nut 62, die an Innenseiten von Seitenwänden des Gehäuses 12 der Haltevorrichtung 10 angebracht sind, verschiebbar geführt. Die Nut 62 ist in Figur 4 mit einer Strichlinie dargestellt, um sie von den Strichlinien, mit denen der Fortsatz 32 des Abstellelements 30, der Rückstellhebel 48 und das Federelement 56 dargestellt sind, unterscheiden zu können. Die Nut 62 verläuft in Längsrichtung des Gehäuses 12, also in Schieberichtung des Schlittens 14. Zur Öffnung des Gehäuses 12 an dessen Vorderseite hin erweitert sich die Nut 62 unter Bildung einer Schrägfläche 64 schräg nach oben. Beim Einschieben des Schlittens 14 in das Gehäuse 12 gleitet der Rückstellzapfen 58 des Rückstellhebels 48 zunächst an der Schrägfläche 64 der Nut 62 entlang. Der Rückstellzapfen 58 und mit ihm zusammen der Rückstellhebel 48 werden dadurch gegen die Kraft des Federelements 56 nach unten gedrückt. Dabei verschwenkt der Rückstellhebel 48 über den das Abstellelement 30 mit dem Halteelement 22 verbindenden Hebel 36 das Halteelement 22 in die auf dem Schlitten 14 aufliegende Stellung nach unten und das Abstellelement 30 in die im Schlitten 14 einliegende Stellung nach oben, so dass der Schlitten 14 gemeinsam mit dem Halteelement 22 und dem Abstellelement 30 in das Gehäuse 12 eingeschoben werden kann.

Der Rückstellhebel 48 und der Hebel 36, der das Abstellelement 30 mit dem Halteelement 22 verbindet, bilden ein Gesperre, das das Halteelement 22 gegen ein Niederdrükken in der nach oben geschwenkten Stellung sperrt: Das Ende des Langlochs 54 im Hebel 36, in das der Zapfen 52 des Rückstellhebels 48 bei nach oben geschwenktem Rückstellhebel 48 und nach oben geschwenktem Halteelement 22 wie in der Zeichnung dargestellt eingreift, verläuft in tangentialer Richtung zum Zapfen 50, mit dem der Rückstellhebel 48 schwenkbar mit dem Schlitten 14 verbunden ist. Durch diesen Verlauf des Schlitzes 54 ist der Hebel 36 in seiner in der Zeichnung dargestellten Stellung gegen ein Verschwenken durch ein am Hebel 36 angreifendes Moment gesperrt. Der Hebel 36 sperrt dadurch seinerseits das Halteelement 22 in dessen nach oben geschwenkter Stellung gegen ein Niederdrücken des Halteelements 22 durch Druck von oben auf das Halteelement 22. Nach unten schwenkbar ist das Halteelement 22 durch einen Druck auf den Rückstellhebel 48 nach unten, wie er beim Einschieben des Schlittens 14 in das Gehäuse 12 von der Schrägfläche 64 über die Rückstellzapfen 58 des Rückstellhebels 48 auf den Rückstellhebel 48 ausgeübt wird. Der dadurch nach unten schwenkende Rückstellhebel 48 schwenkt den das Abstellelement 30 mit dem Halteelement 22 verbindenden Hebel 36 und über diesen das Halteelement 22 nach unten und zugleich das Abstellelement 30 nach oben.

## Patentansprüche

1. Haltevorrichtung (10) für einen Getränkebehälter, der zum geneigten Einbau in einen Kraftwagen vorgesehen ist, mit einem Schlitten (14), der mit einer Schiebeführung schubladenartig aus einer eingeschobenen Stellung in eine ausgezogene Stellung linear verschiebbar geführt ist, mit einem Halteelement (22), das nach oben schwenkbar am Schlitten (14) angebracht ist und das eine Einstellöffnung (24) zum Einstellen des Getränkebehälters aufweist, mit einem Abstellelement (30), das über eine Führung (32, 34) nach unten und in einen Winkel zum Schlitten (14) beweglich am Schlitten (14) geführt ist und auf das ein in die Einstellöffnung (24) des Halteelements (22) eingestellter Getränkebehälter stellbar ist, und mit einem Getriebe (36), das das Abstellelement (30) nach unten bewegt, wenn das Halteelement (22) nach oben schwenkt, **dadurch gekennzeichnet, dass** das Getriebe ein Hebelgetriebe (36) aufweist, das das Abstellelement (30) beweglich mit dem Halteelement (22) verbindet.

2. Haltevorrichtung nach Anspruch 1, **dadurch gekennzeichnet, dass** die Haltevorrichtung (10) ein Gesperre (36, 48, 52, 54) aufweist, das das Halteelement (22) in der nach oben geschwenkten Stellung gegen ein Niederdrücken sperrt.

3. Haltevorrichtung nach Anspruch 1, **dadurch gekennzeichnet, dass** das Abstellelement (30) eine Tropfschale aufweist.

4. Haltevorrichtung nach Anspruch 1, **dadurch gekennzeichnet, dass** die Haltevorrichtung (10) ein Schwenkgelenk (26) aufweist, mit dem das Halteelement (22) nach oben schwenkbar am Schlitten (14) angebracht ist, und dass das Schwenkgelenk (26) in einem in Ausziehrichtung vorderen Bereich des Schlittens (14) bzw. des Halteelements (22) angeordnet ist.

5. Haltevorrichtung nach Anspruch 1, **dadurch gekennzeichnet, dass** die Haltevorrichtung (10) einen Schwenkbeschlag (32, 34) als Führung für das Abstellelement (30) aufweist, mit dem das Abstellelement (30) nach unten schwenkbar am Schlitten (14) angebracht ist.

6. Haltevorrichtung nach Anspruch 5, **dadurch gekennzeichnet, dass** der Schwenkbeschlag (32, 34) eine Schwenkachse aufweist, die sich in Ausziehrichtung hinter dem eigentlichen Abstellelement (30) befindet.

7. Haltevorrichtung nach Anspruch 1, **dadurch gekennzeichnet, dass** die Haltevorrichtung (10) mindestens ein Federelement (56) aufweist, das mittelbar oder unmittelbar am Halteelement (22) angreift und dieses nach oben drückt.

8. Haltevorrichtung nach Anspruch 1, **dadurch gekennzeichnet, dass** die Haltevorrichtung (10) eine Rückstelleinrichtung (48, 58, 64) aufweist, die das Halteelement (22) beim Verschieben des Schlittens (14) aus der ausgezogenen Stellung in die eingeschobene Stellung nach unten schwenkt.

9. Haltevorrichtung nach Anspruch 8, **dadurch gekennzeichnet, dass** die Rückstelleinrichtung (48, 58, 64) einen Rückstellhebel (48) aufweist, der schwenkbar am Schlitten (14) angebracht ist, der mittelbar oder unmittelbar am Halteelement (22) angreift und der das Halteelement (22) beim Verschieben des Schlittens (14) aus der ausgezogenen Stellung in die eingeschobene Stellung nach unten schwenkt.

## Claims

1. Holding device (10) for a drinks container, intended for inclined installation in a motor vehicle, having a carriage (14), which is so guided by means of a slide guide element in the manner of a drawer as to be linearly displaceable from a pushed-in position to a pulled-out position, having a holding element (22), which is so mounted on the carriage (14) that it can be pivoted up and which has an insertion opening (24) for inserting the drinks container, having a set-down element (30), which is so guided on the carriage (14) by means of a guide element (32, 34) that it can move down and at an angle to the carriage (14) and on which a drinks container inserted into the insertion opening (24) of the holding element (22) can be set down, and having a mechanism (36) which moves the set-down element (30) down when the holding element (22) pivots up, **characterised in that** the mechanism comprises a lever mechanism (36), which movably connects the set-down element (30) to the holding element (22).

2. Holding device according to claim 1, **characterised in that** the holding device (10) has a blocking mechanism (36, 48, 52, 54), which prevents the holding element (22) from being pressed down when it is in the pivoted-up position.

3. Holding device according to claim 1, **characterised in that** the set-down element (30) has a drip plate.

4. Holding device according to claim 1, **characterised in that** the holding device (10) has a pivot joint (26), by means of which the holding element (22) is so mounted on the carriage (14) that it can pivot up; and the pivot joint (26) is arranged in a forward region (in the pulling-out direction) of the carriage (14) and of the holding element (22).

5. Holding device according to claim 1, **characterised in that** the holding device (10) has a pivot mounting (32, 34) as a guide element for the set-down element (30), by means of which the set-down element (30) is so attached to the carriage (14) that it can pivot down.

6. Holding device according to claim 5, **characterised in that** the pivot mounting (32, 34) has a pivotal axis which is located, in the pulling-out direction, behind the actual set-down element (30).

7. Holding device according to claim 1, **characterised in that** the holding device (10) has at least one spring element (56), which acts directly or indirectly on the holding element (22) and urges it upwards.

8. Holding device according to claim 1, **characterised in that** the holding device (10) has a returning device (48, 58, 64), which pivots the holding element (22) down on displacement of the carriage (14) from the pulled-out position into the pushed-in position.

9. Holding device according to claim 8, **characterised in that** the returning device (48, 58, 64) has a returning lever (48), which is pivotally mounted on the carriage (14), which acts directly or indirectly on the holding element (22) and which pivots the holding element (22) down on displacement of the carriage (14) from the pulled-out position into the pushed-in position.

## Revendications

1. Dispositif de support (10) pour un réceptacle de boissons, prévu pour être intégré à l'oblique dans un véhicule automatique et comprenant un chariot (14) guidé à coulissement linéaire par un guide coulissant, à la manière d'un tiroir, d'une position rentrée à une position déployée ; un élément de retenue (22) monté sur ledit chariot (14) avec faculté de pivotement vers le haut, et muni d'un orifice (24) d'ajustement du réceptacle de boissons ; un reposoir (30) qui est guidé sur ledit chariot (14) par l'intermédiaire d'un guide (32, 34), avec mobilité vers le bas et selon un angle vis-à-vis dudit chariot (14), et sur lequel peut être déposé un réceptacle de boissons placé dans l'orifice d'ajustement (24) de l'élément de retenue (22) ; et une transmission (36) animant ledit reposoir (30) d'un mouvement descendant lorsque ledit élément de retenue (22) pivote vers le haut, **caractérisé par le fait que** la transmission présente une transmission par levier (36), reliant le reposoir (30) à l'élément de retenue (22) de façon mobile.

2. Dispositif de support selon la revendication 1, **caractérisé par le fait que** ledit dispositif de support (10) présente un verrou (36, 48, 52, 54) qui, dans la position prise par pivotement ascendant, interdit un enfoncement de l'élément de retenue (22).

3. Dispositif de support selon la revendication 1, **caractérisé par le fait que** le reposoir (30) possède une soucoupe collectrice.

4. Dispositif de support selon la revendication 1, **caractérisé par le fait que** ledit dispositif de support (10) comporte une articulation pivotante (26) par laquelle l'élément de retenue (22) est monté, sur le chariot (14), avec faculté de pivotement vers le haut ; et **par le fait que** ladite articulation pivotante (26) est implantée dans une région respective dudit chariot (14) ou dudit élément de retenue (22) qui est située à l'avant dans la direction de déploiement.

5. Dispositif de support selon la revendication 1, **caractérisé par le fait que** ledit dispositif de support (10) présente une armature pivotante (32, 34) remplissant la fonction d'un guide destiné au reposoir (30) et par laquelle ledit reposoir (30) est monté, sur le chariot (14), avec faculté de coulissement vers le bas.

6. Dispositif de support selon la revendication 5, **caractérisé par le fait que** l'armature pivotante (32, 34) possède un axe de pivotement situé, dans la direction de déploiement, derrière le reposoir (30) proprement dit.

7. Dispositif de support selon la revendication 1, **caractérisé par le fait que** ledit dispositif de support (10) comporte au moins un élément à ressort (56) venant en prise indirecte ou directe avec l'élément de retenue (22), et poussant ce dernier vers le haut.

8. Dispositif de support selon la revendication 1, **caractérisé par le fait que** ledit dispositif de support (10) présente un système de rappel (48, 58, 64) qui imprime un pivotement vers le bas, à l'élément de retenue (22), lors du coulissement du chariot (14) depuis la position déployée jusqu'à la position rentrée.

9. Dispositif de support selon la revendication 8, **caractérisé par le fait que** le système de rappel (48, 58, 64) possède un levier de rappel (48) monté à pivotement sur le chariot (14), qui vient en prise indirecte ou directe avec l'élément de retenue (22) et qui, lors du coulissement dudit chariot (14) depuis la position déployée jusqu'à la position rentrée, imprime un pivotement vers le bas audit élément de retenue (22).
